# EUROPÄISCHE PATENTSCHRIFT

(11) **EP 1 254 044 B1**
(45) Veröffentlichungstag und Bekanntmachung des Hinweises auf die Patenterteilung: **14.05.2003**
(21) Anmeldenummer: 01911579.9
(22) Anmeldetag: 02.02.2001
(51) Int. Cl.: B62D 55/00

(54) **ANTRIEBSANLAGE FÜR EIN KETTENFAHRZEUG**
DRIVE UNIT FOR A TRACK-LAYING VEHICLE
UNITE D'ENTRAINEMENT POUR UN VEHICULE CHENILLE

(30) Priorität: 08.02.2000 DE 10005527
(43) Veröffentlichungstag der Anmeldung: 06.11.2002
(73) Patentinhaber: ZF FRIEDRICHSHAFEN Aktiengesellschaft, 88038 Friedrichshafen (DE)
(72) Erfinder: WOLFGANG, Werner, 88213 Ravensburg (DE); HUND, Hubert, 88074 Meckenbeuren (DE); RÖSCH, Thomas, 88090 Immenstaad (DE); WALTER, Bruno, 88069 Tettnnang (DE)
(86) Internationale Anmeldenummer: EP0101116
(87) Internationale Veröffentlichungsnummer: WO01058743

(56) Entgegenhaltungen:
- EP-A- 0 924 132
- WO-A-98/40235
- DE-A- 19 537 945
- US-A- 4 554 989
- US-A- 5 861 569

## Beschreibung

Die Erfindung betrifft eine Antriebsanlage für ein Kettenfahrzeug nach dem Oberbegriff des Hauptanspruchs.

Bei Kettenfahrzeugen gelten, insbesondere wenn sie für militärische Zwecke verwendet werden, sehr hohe Anforderungen an die Zuverlässigkeit der Antriebsanlage. Auch nach einer teilweisen Beschädigung des Fahrzeugs ist zu gewährleisten, daß das Fahrzeug ohne fremde Hilfe aus einer Gefahrenzone bewegt werden kann.

Bei elektrisch angetriebenen Kettenfahrzeugen kann ein Notbetrieb dadurch aufrechterhalten werden, daß die Aggregate jeder Seite miteinander koppelbar sind. Die als nächstliegend betrachtete gattungsgemäße EP 924132 A2 beschreibt eine Antriebsanlage für ein Kettenfahrzeug die aus zwei beidseits des Fahrzeuggehäuses angeordneten Antriebseinheiten besteht. Jede Antriebseinheit weist einen Antriebsmotor auf, welcher einen elektrischen Generator antreibt. Die Antriebsketten sind über zugeordnete elektrische Motoren antreibbar.

Die DE 19537945 A1 zeigt eine Antriebsanlage für ein Kettenfahrzeug, bei der eine Leistungsaufteilung über 4 Motoren erfolgt.

Der Erfindung liegt die Aufgabe zugrunde, eine Antriebsanlage für ein Kettenfahrzeug anzugeben, welche eine erhöhte Zuverlässigkeit und Betriebssicherheit auch bei einer teilweisen Beschädigung des Fahrzeugs aufweist. Außerdem sollen bauraumgünstige Standardkomponenten und Aggregate verwendet werden können.

Diese Aufgabe wird durch eine auch die Merkmale des kennzeichnenden Teils des Hauptanspruchs aufweisende Antriebsanlage für ein Kettenfahrzeug gelöst.

Gemäß der Erfindung ist also der rechten Antriebskette ein erster rechter und ein zweiter rechter elektrischer Antriebsmotor zugeordnet und der linken Antriebskette ein erster linker und ein zweiter linker elektrischer Antriebsmotor zugeordnet. Die beiden ersten Antriebsmotoren werden vom ersten Generator und die beiden zweiten Antriebsmotoren vom zweiten Generator gespeist.

Hierdurch wird erreicht, daß bei einem Ausfall einer beliebigen Komponente der Antriebsanlage das Kettenfahrzeug dennoch fahr- und lenkbar bleibt. Fällt beispielsweise die erste Brennkraftmaschine oder der erste Generator aus, so verbleiben zum Antrieb der beiden Antriebsketten noch die zweite Brennkraftmaschine und der zweite Generator sowie der zweite linke und der zweite rechte Antriebsmotor. Fallen einer oder zwei erste Antriebsmotoren oder einer oder zwei zweite Antriebsmotoren aus, so verbleibt zum Antrieb jeder Antriebskette immer noch ein Antriebsmotor.

In einer vorteilhaften Ausgestaltung der Erfindung ist jeder Antriebskette eine Summierungseinrichtung zugeordnet, über welche die Antriebsleistung jeweils eines ersten und eines zweiten elektrischen Antriebsmotors auf ein Kettenantriebsrad gekoppelt ist. Gegenüber einer Anordnung, bei welcher jede Antriebskette jeweils über ein vorderes Kettenantriebsrad und ein hinteres Kettenantriebsrad angetrieben wird, wird der Vorteil erzielt, daß Verspannungen in der Antriebskette vermieden werden.

Die Verschaltung der Energiepfade kann vorteilhaft wie folgt erfolgen, wenn die Generatoren und die elektrischen Antriebsmotoren Wechselstrommaschinen sind: Der Ausgang des ersten Generators ist mit dem Eingang eines ersten Gleichrichters elektrisch verbunden. Der Ausgang des zweiten Generators ist mit dem Eingang eines zweiten Gleichrichters elektrisch verbunden. Der Ausgang des ersten Gleichrichters ist gleichzeitig mit dem Eingang eines ersten linken und eines ersten rechten Wechselrichters elektrisch verbunden. Der Ausgang des zweiten Gleichrichters ist gleichzeitig mit dem Eingang eines zweiten linken und eines zweiten rechten Wechselrichters elektrisch verbunden. Der Ausgang jedes Wechselrichters ist mit dem Eingang eines zugeordneten Antriebsmotors elektrisch verbunden.

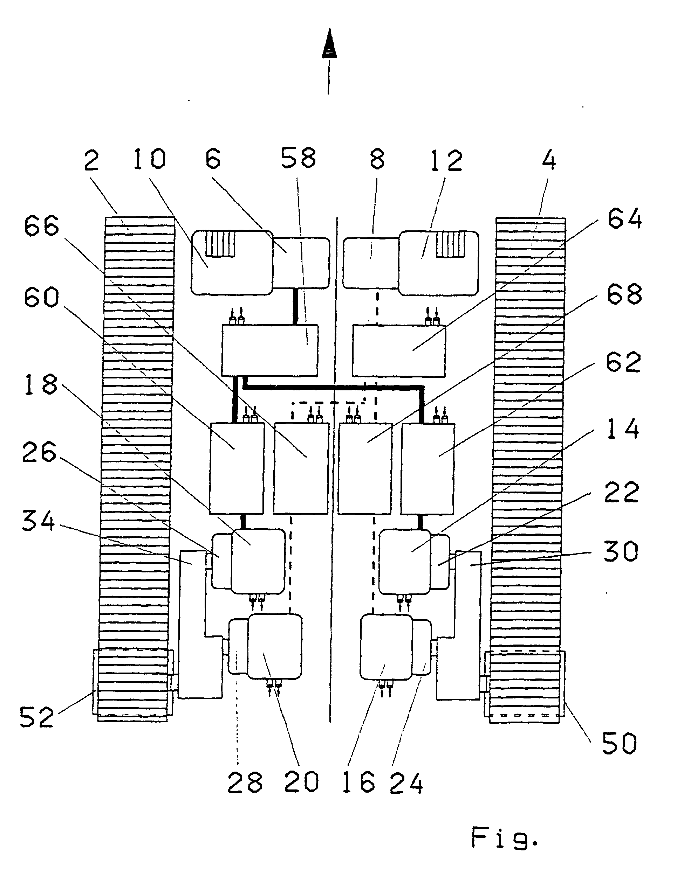

Die Erfindung wird anhand der beiliegenden Figur näher erläutert, welche schematisch die Komponenten der Antriebsanlage und deren Verschaltung zeigt. In der Figur ist mit 2 die linke Antriebskette und mit 4 die rechte Antriebskette bezeichnet. Die als Wechselstrommaschinen ausgebildeten Generatoren 6, 8 werden von jeweils einer Brennkraftmaschine 10, 12 angetrieben. Der rechten Antriebskette 4 ist ein erster rechter elektrischer Antriebsmotor 14 und ein zweiter rechter elektrischer Antriebsmotor 16 zugeordnet. Der linken Antriebskette 2 ist ein erster linker elektrischer Antriebsmotor 18 und ein zweiter linker elektrischer Antriebsmotor 20 zugeordnet. Die beiden ersten Antriebsmotoren 14, 18 werden vom ersten Generator 6 gespeist und die beiden zweiten Antriebsmotoren 16, 20 werden vom zweiten Generator 8 gespeist. Alle elektrischen Antriebsmotoren sind Wechselstrommaschinen. Jedem elektrischen Antriebsmotor ist ein Reduziergetriebe 22, 24, 26, 28 zugeordnet.

Die beiden rechten Antriebsmotoren 14, 16 treiben über die Reduziergetriebe 22, 24 ein rechtes Summierungsgetriebe 30, während die beiden linken Antriebsmotoren 18, 20 über die Reduziergetriebe 26, 28 ein linkes Summierungsgetriebe 34 antreiben. Über diese Summierungsgetriebe wird die Antriebsleistung jeweils eines ersten elektrischen Antriebsmotors 14, 18 und eines zweiten elektrischen Antriebsmotors 16, 20 auf ein Kettenantriebsrad 50, 52 gekoppelt.

Der Ausgang des von der ersten Brennkraftmaschine 10 angetriebenen Wechselstromgenerators 6 ist mit dem Eingang eines ersten Gleichrichters 58 elektrisch verbunden. Der Ausgang dieses Gleichrichters 58 ist in zwei Pfade geteilt. Er ist gleichzeitig mit dem Eingang eines ersten linken Wechselrichters 60 und eines ersten rechten Wechselrichters 62 elektrisch verbunden. Der Ausgang des ersten linken Wechselrichters 60 ist mit dem Eingang des ersten linken elektrischen Antriebsmotors 18 verbunden. Der Ausgang des ersten rechten Wechselrichters 62 ist mit dem Eingang des ersten rechten elektrischen Antriebsmotors 14 verbunden. Die Verschaltung des zweiten Generators 8, des zweiten Gleichrichters 64, der zweiten rechten und linken Wechselrichter 66, 68 und der rechten und linken zweiten elektrischen Antriebsmotoren, 16, 20 erfolgt entsprechend.

Durch das redundante Vorhandensein der Komponenten und deren Verschaltung wird eine sehr hohe Betriebssicherheit auch bei einer teilweisen Beschädigung der Antriebsanlage erzielt. Durch den erfindungsgemäßen Aufbau der Antriebsanlage wird die benötigte Antriebsleistung von mehreren kleinen Komponenten erzeugt und übertragen. Durch die Verwendung von kleinbauenden Komponenten ist eine flexiblere Ausnutzung vorhandener Bauräume möglich. Da eine einzelne Komponente nicht für die volle benötigte Leistung ausgelegt zu werden braucht, kann auf verfügbare, kostengünstige Komponenten, welche in größerer Stückzahl hergestellt werden, zurückgegriffen werden.

### Bezugszeichen

- 2: linke Antriebskette
- 4: rechte Antriebskette
- 6: erster elektrischer Generator
- 8: zweiter elektrischer Generator
- 10: erste Brennkraftmaschine
- 12: zweite Brennkraftmaschine
- 14: erster rechter elektrischer Antriebsmotor
- 16: zweiter rechter elektrischer Antriebsmotor
- 18: erster linker elektrischer Antriebsmotor
- 20: zweiter linker elektrischer Antriebsmotor
- 22: Getriebe
- 24: Getriebe
- 26: Getriebe
- 28: Getriebe
- 30: Summierungsgetriebe
- 34: Summierungsgetriebe
- 50: Kettenantriebsrad
- 52: Kettenantriebsrad
- 58: erster Gleichrichter
- 60: erster linker Wechselrichter
- 62: erster rechter Wechselrichter
- 64: zweiter Gleichrichter
- 66: zweiter linker Wechselrichter
- 68: zweiter rechter Wechselrichter

## Patentansprüche

1. Antriebsanlage für ein Kettenfahrzeug mit einem ersten und einem zweiten elektrischen Generator (6, 8), mit einer ersten und einer zweiten Brennkraftmaschine (10, 12), wobei jeweils ein Generator (6, 8) von einer Brennkraftmaschine (10, 12) antreibbar ist, und mit elektrischen Antriebsmotoren (14, 16, 18, 20) zum Antrieb von einer rechten und einer linken Antriebskette (4, 2), wobei Elemente der Antriebseinheit miteinander verknüpft sind, **dadurch gekennzeichnet, daß** der rechten Antriebskette (4) ein erster rechter und ein zweiter rechter elektrischer Antriebsmotor (14, 16) zugeordnet ist, daß der linken Antriebskette (2) ein erster linker und ein zweiter linker elektrischer Antriebsmotor (18, 20) zugeordnet ist, daß die beiden ersten Antriebsmotoren (14, 18) vom ersten Generator (6) und die beiden zweiten Antriebsmotoren (16, 20) vom zweiten Generator (8) gespeist werden.

2. Antriebsanlage nach Anspruch 1, **dadurch gekennzeichnet, daß** jeder Antriebskette (2, 4) eine Summierungseinrichtung (30, 34) zugeordnet ist, über welche die Antriebsleistung jeweils eines ersten und eines zweiten elektrischen Antriebsmotors (14, 18, 16, 20) auf ein Kettenantriebsrad (50, 52) gekoppelt ist.

3. Antriebsanlage nach Anspruch 1 oder 2, **dadurch gekennzeichnet, daß** die Generatoren (6, 8) und die elektrischen Antriebsmotoren (14, 16, 18, 20) Wechselstrommaschinen sind, daß der Ausgang des ersten Generators (6) mit dem Eingang eines ersten Gleichrichters (58) elektrisch verbunden ist, daß der Ausgang des zweiten Generators (8) mit dem Eingang eines zweiten Gleichrichters (64) elektrisch verbunden ist, daß der Ausgang des ersten Gleichrichters (58) gleichzeitig mit dem Eingang eines ersten linken und eines ersten rechten Wechselrichters (60, 62) elektrisch verbunden ist, daß der Ausgang des zweiten Gleichrichters (64) gleichzeitig mit dem Eingang eines zweiten linken und eines zweiten rechten Wechselrichters (66, 68) elektrisch verbunden ist, und daß der Ausgang jedes Wechselrichters (60, 62, 66, 68) mit dem Eingang eines zugeordneten Antriebsmotors (18, 14, 20, 16) elektrisch verbunden ist.

## Claims

1. Drive system for a tracked vehicle with a first and a second electric generator (6, 8), with a first and a second internal combustion engine (10, 12), wherein each generator (6, 8) can be driven by one internal combustion engine (10, 12), and with electric drive motors (14, 16, 18, 20) for driving a right-hand and a left-hand drive chain (4, 2), wherein elements of the drive unit are linked together, **characterised in that** a first right-hand and a second right-hand electric drive motor (14, 16) are associated with the right-hand drive chain (4), that a first left-hand and a second left-hand electric drive motor (18, 20) are associated with the left-hand drive chain (2), that the two first drive motors (14, 18) are fed by the first generator (6) and the two second drive motors (16, 20) are fed by the second generator (8).

2. Drive system according to Claim 1, **characterised in that** a summation device (30, 34) is associated with each drive chain (2, 4), via which device the drive power of a respective first and a respective second electric drive motor (14, 18, 16, 20) is coupled to a chain drive wheel (50, 52).

3. Drive system according to Claim 1 or 2, **characterised in that** the generators (6, 8) and the electric drive motors (14, 16, 18, 20) are alternating-current machines, that the output of the first generator (6) is electrically connected to the input of a first rectifier (58), that the output of the second generator (8) is electrically connected to the input of a second rectifier (64), that the output of the first rectifier (58) is at the same time electrically connected to the input of a first left-hand and a first right-hand inverter (60, 62), that the output of the second rectifier (64) is at the same time electrically connected to the input of a second left-hand and a second right-hand inverter (66, 68), and that the output of each inverter (60, 62, 66, 68) is electrically connected to the input of an associated drive motor (18, 14, 20, 16).

## Revendications

1. Installation d'entraînement pour un véhicule à chenilles comprenant une première et une seconde génératrice électrique (6, 8), un premier et un second moteur à combustion interne (10, 12), chaque génératrice (6, 8) pouvant être entraînée respectivement par un moteur à combustion interne (10, 12), et des moteurs d'entraînement électriques (14, 16, 18, 20) destinés à entraîner une chenille d'entraînement droite et une chenille d'entraînement gauche (4, 2), certains éléments de l'unité d'entraînement étant combinés entre eux, **caractérisée en ce qu'**un premier moteur d'entraînement électrique droit et un deuxième moteur d'entraînement électrique droit (14, 16) sont associés à la chenille d'entraînement droite (4), **en ce qu'**un premier moteur d'entraînement électrique gauche et un deuxième moteur d'entraînement électrique gauche (18, 20) sont associés à la chenille d'entraînement gauche (2) et **en ce que** les deux premiers moteurs d'entraînement (14, 18) sont alimentés par la première génératrice (6) et les deux seconds moteurs d'entraînement (16, 20) sont alimentés par la seconde génératrice (8).

2. Installation d'entraînement selon la revendication 1, **caractérisée en ce que**, à chaque chenille d'entraînement (2, 4) est associé un dispositif additionneur (30, 34) par l'intermédiaire duquel les puissances d'entraînement d'un premier et d'un deuxième moteur d'entraînement électrique (14, 18, 16, 20) sont accouplées à une roue d'entraînement de chenille (50, 52).

3. Installation d'entraînement selon la revendication 1 ou 2, **caractérisée en ce que** les génératrices (6, 8) et les moteurs d'entraînement électriques (14, 16, 18, 20) sont des machines à courant alternatif, **en ce que** la sortie de la première génératrice (6) est reliée électriquement à l'entrée d'un premier redresseur (58), **en ce que** la sortie de la deuxième génératrice (8) est reliée électriquement à l'entrée d'un deuxième redresseur (64), **en ce que** la sortie du premier redresseur (58) est simultanément reliée électriquement à l'entrée d'un premier onduleur gauche et à l'entrée d'un premier onduleur droit (60, 62), **en ce que** la sortie du deuxième redresseur (64) est simultanément reliée électriquement à l'entrée d'un deuxième onduleur gauche et à l'entrée d'un deuxième onduleur droit (66, 68) et **en ce que** la sortie de chaque onduleur (60, 62, 66, 68) est reliée électriquement à l'entrée d'un moteur d'entraînement correspondant (18, 14, 20, 16).
